(19) Europäisches Patentamt European Patent Office Office européen des brevets

(11) **EP 3 951 210 A1**

(12) **EUROPEAN PATENT APPLICATION**
published in accordance with Art. 153(4) EPC

(43) Date of publication:
**09.02.2022 Bulletin 2022/06**

(21) Application number: **20801908.3**

(22) Date of filing: **22.04.2020**

(51) International Patent Classification (IPC):
**F16F 15/123** (2006.01)   **F16J 15/3204** (2016.01)
**F16J 15/3232** (2016.01)

(52) Cooperative Patent Classification (CPC):
**F16F 15/123; F16J 15/3204; F16J 15/3232**

(86) International application number:
**PCT/JP2020/017288**

(87) International publication number:
**WO 2020/226055 (12.11.2020 Gazette 2020/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.05.2019 JP 2019089047**

(71) Applicant: **AISIN AW Industries CO., Ltd.
Echizen-shi, Fukui 915-8520 (JP)**

(72) Inventors:
• **YOSHIKAWA Takuya**
  **Echizen-shi, Fukui 915-8520 (JP)**
• **TAKIZAWA Yu**
  **Echizen-shi, Fukui 915-8520 (JP)**
• **TAKAYANAGI Hiroki**
  **Echizen-shi, Fukui 915-8520 (JP)**
• **KATO Akiyoshi**
  **Echizen-shi, Fukui 915-8520 (JP)**

(74) Representative: **Kramer Barske Schmidtchen
Patentanwälte PartG mbB
European Patent Attorneys
Landsberger Strasse 300
80687 München (DE)**

(54) **DAMPER DEVICE**

(57)   A damper device of the present disclosure includes an input element to which torque from an engine is transmitted, an output element, and an elastic body that transmits torque between the input element and the output element. The input element is formed to enclose the elastic body. The output element includes a clearance portion that allows passage of a tool for attaching and detaching the engine and the input element. A sealing member is disposed between the input element and another member other than components of the damper device so as to restrict an entry of foreign substances into the input element on the outside the clearance portion in a radial direction. As a result, assemblability and maintenability of the damper device can be further improved while restricting the entry of foreign substances into the input element formed to enclose an elastic body.

FIG. 2

# Description

## Technical Field

The present disclosure relates to a damper device including an input element, an output element, and an elastic body that transmits torque between the input element and the output element.

## Background

A conventionally known torsional vibration damper for a wet friction clutch of an automobile includes a primary mass for introducing torque and a secondary mass for releasing rotatable torque via an energy storage element such as an arc spring to the primary mass (as shown in, for example, Patent Literature 1). In the torsional vibration damper, the primary mass forms a receiving channel for receiving the energy storage element. The receiving channel includes a first shell that covers a prime mover side of the energy storage element and a second shell that is connected to the first shell and covers a transmission side of the energy storage element. Further, a flange protrudes from the secondary mass in the receiving channel and a splash guard is formed so as to protect the flange from contamination by liquid and/or dust with the secondary shell. The flange of the secondary mass is connected to a hub and the second shell includes a plurality of tool holes through which a tool is inserted to rotate a bolt for fastening the first shell to a torque generating source. Further, each tool hole of the second shell is fitted with a sealing element with a circumferential sealing lip that slidably contacts with the hub and/or a shaft connected to the hub.

## Citation List

### Patent Literature

PTL1: DE 102013205919 A1

## Summary

### Technical Problem

In the conventional damper device described above, the sealing element restricts an entry of liquid and dust into the receiving channel, or the primary mass. However, it is necessary to attach or detach the sealing element to or from the secondary shell when the damper device is assembled to or detached from the torque generating source or the wet friction clutch. For example, when disconnecting the primary mass of the above damper device from the torque generating source, the sealing element must be removed from the second shell after disconnecting the hub connected to the secondary mass from the shaft and the like. Therefore, the above damper system has room for improvement in assemblability and maintenability.

A subject matter of the present disclosure is to improve assemblability and maintenability of the damper device while restricting an entry of foreign substances into an input element formed to enclose an elastic body.

## Solution to Problem

A damper device of the present disclosure includes an input element to which torque from an engine is transmitted, an output element, and an elastic body that transmits torque between the input element and the output element. The input element is formed to enclose the elastic body. The output element includes a clearance portion that allows passage of a tool for attaching and detaching the engine and the input element. A sealing member is disposed between the input element and another member other than components of the damper device so as to restrict an entry of foreign substances into the input element on the outside the clearance portion in a radial direction.

In the damper device of the present disclosure, the sealing member is disposed between the input element formed to enclose the elastic body and another member other than the components of the damper device so as to restrict the entry of foreign substances into the input element. Further, the sealing member restricts the entry of foreign substances into the input element on the radially outside the clearance portion that allows passage of the tool for attaching and detaching the engine and the input element. This allows the tool to be inserted into the clearance portion by separating the another component from the damper device, such that the engine and the input element can be attached and detached from each other by means of the tool inserted into the clearance portion. As a result, assemblability and maintenability of the damper device can be further improved while restricting the entry of foreign substances into the input element formed to enclose an elastic body.

## Brief Description of Drawings

Fig. 1 is a schematic configuration diagram illustrating a power transmitting device including a damper device according to a first embodiment of the present disclosure;
Fig. 2 is an enlarged sectional view illustrating the power transmitting device including the damper device according to the first embodiment;
Fig. 3 is an enlarged sectional view illustrating a power transmitting device including another damper device according to the first embodiment;
Fig. 4 is an enlarged sectional view illustrating a power transmitting device including yet another damper device according to the first embodiment;
Fig. 5 is a schematic configuration diagram illustrating a power transmitting device including a damper device according to a second embodiment of the present disclosure;

Fig. 6 is an enlarged sectional view illustrating the power transmitting device including the damper device according to the second embodiment;

Fig. 7 is a schematic configuration diagram illustrating another damper device according to the second embodiment; and

Fig. 8 is a schematic configuration diagram illustrating yet another damper device according to the second embodiment.

**Description of Embodiments**

The following describes embodiments of the disclosure with reference to drawings.

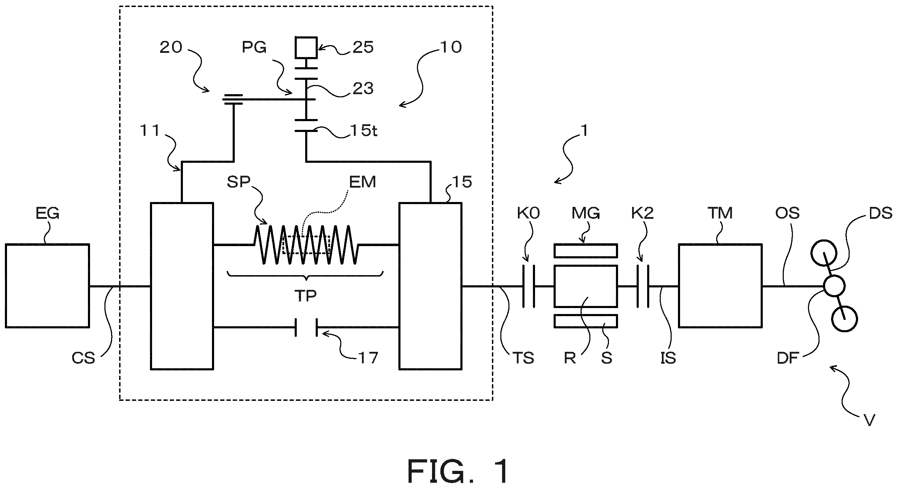

Fig. 1 is a schematic configuration diagram illustrating a power transmitting device 1 including a damper device 10 according to a first embodiment of the present disclosure. The power transmitting device 1 shown in Fig. 1 is mounted on a vehicle with an engine (internal combustion engine) EG that generates power by explosive combustion of a mixture of a hydrocarbon fuel such as gasoline, light oil, liquefied petroleum gas or the like and the air. The power transmitting device 1 is capable of transmitting power from the engine EG to drive shafts DS. As shown in Fig. 1, the power transmitting device 1 includes, in addition to the damper device 10 connected to a crankshaft CS of the engine EG, a motor generator MG, a transmission TM, a clutch K0 arranged between the damper device 10 and the motor generator MG, and a clutch K2 arranged between the motor generator MG and the transmission TM, and a differential gear DF coupled to the transmission TM and the drive shaft DS.

The motor generator MG is a three-phase synchronous generator motor that is electrically connected to a battery (not shown) via an inverter that is not shown in the figure. The motor-generator MG includes a stator S and a rotor R that is coupled to the damper device 10 via the clutch K0 and to the transmission TM via the clutch K2. The motor generator MG is driven by electric power from the battery so as to output driving torque to the transmission TM and can output regenerative braking torque to the transmission TM during braking the vehicle V. Electric power generated by the motor generator MG as a result of an output of the regenerative braking torque is used to charge the battery and drive auxiliary equipment (not shown).

The transmission TM is, for example, 4-10 speed transmission that includes an input shaft (input member) IS coupled to the rotor R of the motor generator MG via the clutch K2, an intermediate shaft (not shown) connected to the input shaft IS, an output shaft (output member) OS connected to the differential gear DF via a gear mechanism (not shown) or directly, at least one planetary gear mechanism for changing a plurality of power transmission paths from the input shaft IS to the output shaft OS, a plurality of clutches and brakes (not shown), and the like. The transmission TM may be, for example, a belt-type continuously variable transmission (CVT), a dual clutch transmission, or the like.

The clutch K0 is, for example, a multi-disc hydraulic clutch that couples the transmission shaft (shaft) TS connected to the damper device 10 to the rotor R of the motor generator MG and also disengages a coupling between the transmission shaft TS and the rotor R. The clutch K2 is, for example, a multi-disc hydraulic clutch that couples the rotor R of the motor generator MG to the input shaft IS of the transmission TM and also disengages a coupling between the rotor R and the input shaft IS. The clutches K0 and K2 may be either single-disc hydraulic clutches or dry clutches such as dog clutches or electromagnetic clutches.

In the power transmitting device 1 of the first embodiment, the clutch K0 is basically released and the clutch K2 is engaged when the vehicle V is started. Thus, the driving torque from the motor generator MG driven by the electric power from the battery is output to the drive shaft DS through the transmission TM, differential gear DF and the like so as to start the vehicle V with the engine EG stopped. After the vehicle V is started, the engine EG is cranked and started by a starter motor (not shown) when an engine start condition is satisfied. Furthermore, when an engagement condition of the clutch K0 is satisfied, the clutch K0 is gradually engaged while slipping. This enables driving torque from the engine EG to be output to the drive shaft DS through the damper device 10, transmission TM, differential gear DF and the like. In the power transmitting device 1, the battery can be charged by the electric power from the motor generator MG, which is driven by the engine EG and generates electricity, while the clutch K2 is released and the clutch K0 is engaged.

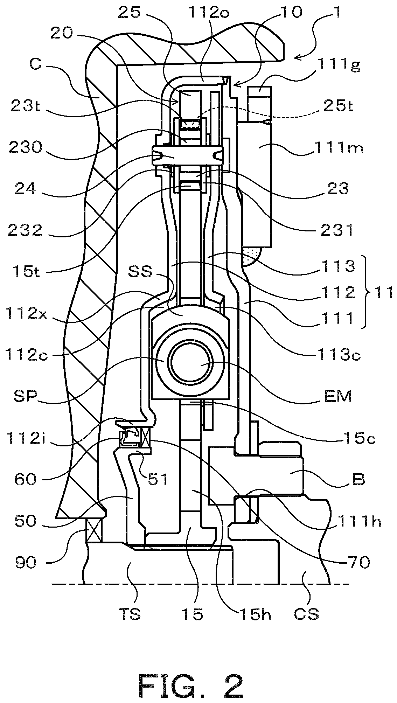

The damper device 10 is configured as a dry damper and is accommodated in a case C of the power transmitting device 1 together with the clutches K0, K2, motor generator MG, and transmission TM so as to be located between the engine EG and the clutch K0. As shown in Figs. 1 and 2, the damper device 10 includes a drive member (input element) 11 and a driven member (output element) 15 as rotating elements. Further, the damper device 10 includes, as torque transmitting elements (torque transmitting elastic bodies), a plurality (in this embodiment, for example, six) of springs (first elastic bodies) SP that act in parallel between the drive member 11 and the driven member 15 to transmit torque, and a plurality (in this embodiment, for example, six) of elastic bodies (second elastic bodies) EM that act in parallel between the drive member 11 and the driven member 15 to transmit torque.

In the description below, an "axial direction" basically denotes an extending direction of a center axis (axial center) of the damper device 10, unless otherwise specified. A "radial direction" basically denotes a radial direction of the damper device 10 and rotational elements of the damper device 10 and the like or more specifically an extending direction of a straight line extended from the center axis of the damper device 10 in a direction perpendicular to the center axis (in a radial direction), unless otherwise specified. A "circumferential direction" basically denotes a circumferential direction of the damper device 10 or the rotational element of the damper device and the like, that is, a direction along a rotating direction of the rotational element, unless otherwise specified.

As shown in Fig. 2, the drive member 11 of the damper device 10 includes a first plate member (front cover) 111 that is fixed to the crankshaft CS of the engine EG, a second plate member (rear cover) 112 that is integrated with the first plate member 111, and a third plate member 113 that is fixed (connected) to the second plate member 112 via a plurality of rivets that are not shown in the figure. The first plate member 111 is an annular plate formed by pressing a steel plate or the like. A plurality of bolt holes 111h are arranged in an inner circumferential portion of the first plate member 111. The first plate member 111 is fixed to the crankshaft CS via a plurality of bolts B that are inserted into the corresponding bolt holes 111h and screwed into the crankshaft CS. A flywheel mass 111m is welded to an outer circumferential portion of the first plate member 111. An outer gear 111g is welded to an outer circumference surface of the flywheel mass 111m. The outer gear 111 meshes with a pinion gear (not shown) that is attached to a rotating shaft of the starter motor described above.

The second plate member 112 is an annular pressed product formed by pressing a steel plate or the like to have an inner diameter larger than that of the first plate member 111. The second plate member 112 includes an annular sidewall portion and an outer cylindrical portion 112o extended in the axial direction from an outer circumference of the sidewall portion. A tip portion of the outer cylindrical portion 112o of the second plate member 112 is welded to the outer circumference of the first plate member 111. Thus, the second plate member 112 is integrated into the first plate member 111 such that the side wall portion faces first plate member 111 with an interval. The second plate member 112 includes a short tubular (cylindrical) inner cylindrical portion 112i extended axially from the inner circumference, a plurality (in this embodiment, for example, six) of spring holding recesses 112x formed at circumferential intervals (equal intervals) along the inner cylindrical portion 112i, and a plurality (in this embodiment, for example, six) of torque transfer portions (elastic body contact portions) 112c. Each of the spring holding recesses 112x has a circumference length corresponding to a natural length of the spring SP. One torque transfer portion 112c is formed between the adjacent spring holding recesses 112x in the circumferential direction.

The third plate member 113 is an annular plate formed by pressing a steel plate or the like so as to have an inner diameter generally the same as that of the second plate member 112. The third plate member 113 is disposed radially inside the outer cylindrical portion 112o of the second plate member 112 in the radial direction and between the first and second plate members 111, 112 in the axial direction, and faces the second plate member 112 (the side wall portion). The third plate member 113 includes a plurality (in this embodiment, for example, six) of spring accommodating windows spaced (equally spaced) in the circumferential direction to face the corresponding spring holding recess 112x of the second plate member 112, and a plurality (in this embodiment, for example, six) of torque transfer portions (elastic body contact portions) 113c. Each of the spring accommodating window has a circumference length corresponding to the natural length of the spring SP. One torque transfer portion 113c is formed between the adjacent spring accommodating windows in the circumferential direction.

The driven member 15 is an annular pressed product formed by pressing a steel plate or the like. The driven member 15 includes an inner cylindrical portion to which the transmission shaft TS is splined (fixed), and an annular plate portion that extends outward in the radial direction from the inner cylindrical portion and is disposed between the second and third plate members 112, 113 in the axial direction. The driven member 15 also includes a plurality (in this embodiment, for example, six) of spring accommodating windows formed in the plate portion at circumferential intervals (equal intervals) and a plurality (in this embodiment, for example, six) of torque transfer portions (elastic body contact portions) 15c. Each of the spring accommodating windows has a circumference length corresponding to the natural length of the spring SP. One torque transfer portion 15c is formed between the adjacent spring accommodating windows in the circumferential direction.

Further, a plurality of tool holes (clearance portions) 15h are formed in an inner circumferential portion of the driven member 15 so as to respectively face the corresponding bolt holes 111h of the first plate member 111 radially inside an inner circumference surface of the inner cylindrical portion 112i of the second plate member 112. A dimension (an inner diameter) of each tool hole 15h is determined to allow a passage of a bolt B and a tool used for screwing the bolt B (connection and separation of the engine EG and the drive member 11). In addition, a plurality of outer teeth 15t are formed on an outer circumference of the driven member 15. The plurality of outer teeth 15t may be formed on the entire circumference of the driven member 15, or may be formed at a plurality of locations circumferentially spaced (equally spaced) on the circumference of the driven member 15.

One spring SP is disposed in each spring holding recess 112x of the second plate member 112, in each spring accommodating window of the third plate member 113 and in each spring accommodating window of the driven member 15. In this embodiment, the spring SP is a straight coil spring made of a metal material wound in a spiral shape so as to have an axial center that extends straight when no load is applied. This allows the spring SP to expand and contract more properly along an axial center thereof than when an arc coil spring is used. As a result, hysteresis, that is difference between a torque transmitted from the spring SP to the driven member 15 when relative displacement between the drive member 11 (input element) and the driven member 15 (output element) increases and the torque transmitted from the spring SP to the driven member 15 when the relative displacement between the drive member 11 and the driven member 15 can be reduced. An arc coil spring may be used as the spring SP.

As shown in Fig. 2, a spring sheet SS is attached to each spring SP prior to its placement in the spring holding recess 112x and the like. The spring sheet SS is fitted to one end of the corresponding spring SP and is formed to cover a radially outer area of an outer circumference of the spring SP. Furthermore, a spring seat (not shown) is fitted to the other end of each spring SP. The spring SP to which the spring seat SS and the like is attached is disposed in the spring holding recess 112x and the like such that the spring seat SS slidably contacts with the corresponding spring holding recess 112x and an inner wall surface of the spring accommodating window. In a mounting state of the damper device 10, each of the torque transfer portions 112c, 113c of the drive member 11 contacts with the spring seat SS or the like on one end side or the other end side of the spring SP arranged in the corresponding spring holding recess 112x and the like. Further, the torque transfer portions 15c located on both sides in the circumferential direction of each spring accommodating window of the driven member 15 contact with the spring seat SS or the like on the one end side or the other end side of the spring SP in the spring accommodating window. As a result, the drive member 11 and the driven member 15 are connected via a plurality of springs SP.

In this embodiment, the elastic members EM are formed in a short cylindrical shape by resin. One elastic member EM is coaxially disposed inside each of springs SP. The plurality of elastic members EM work in parallel to the plurality of springs SP when either an input torque (drive torque) to the drive member 11 or a torque (driven torque) applied to the driven member 15 from an axle side is equal to or larger than a predetermined torque (first threshold value) T1 smaller than a torque T2 (second threshold value) corresponding to a maximum torsion angle $\theta$max of the damper device 10 and a torsion angle of the drive member 11 relative to the driven member 15 becomes equal to or larger than a predetermined angle $\theta$ref. This enables rigidity of the damper device 10 when a large torque is transmitted thereto to be increased. In addition, as shown in Fig. 1, the damper device 10 includes a stopper 17 that restricts a relative rotation of the drive member 11 and the driven member 15. When the input torque to the drive member 11 reaches the above torque T2 corresponding to the maximum torsion angle $\theta$max of the damper device 10, the stopper 17 restricts the relative rotation of the drive member 11 and the driven member 15, and accordingly, all deflections of the spring SP and the elastic member EM are restricted.

Further, the damper device 10 includes a rotary inertia mass damper 20 arranged in parallel with a torque transmission path TP including a plurality of springs SP and a plurality of elastic members EM, as shown in FIG. 1. The rotary inertia mass damper 20 includes a single-pinion planetary gear mechanism PG (see Fig. 1) disposed between the drive member 11 or the input element of the damper device 10 and the driven member 15 or the output element. In this embodiment, the planetary gear mechanism PG includes a driven member 15 that includes outer teeth 15t on its outer circumference and works as a sun gear, a plurality (in this embodiment, for example, 3-6) of pinion gears 23 that respectively mesh with the outer teeth 15t of the driven member 15, the second and third plate members 112, 113 of the drive member 11 that rotatably support the plurality of pinion gears 23 and work as a carrier, and the ring gear 25 that meshes with each of the pinion gears 23 and is arranged concentrically with the driven member 15 (outer tooth 15t) or the sun gear.

The second and third plate members 112, 113, which configures the carriers of the planetary gear mechanism PG, support corresponding ends of a plurality of pinion shafts 24 respectively inserted into the pinion gears 23 radially outside the spring holding recesses 112x and the spring accommodating window. Thus, the plurality of pinion gears 23 of the planetary gear mechanism PG are disposed outside of the plurality of springs SP in the radial direction of the driven member 15 and like so as to be arranged in the circumferential direction. The rivets for fastening the second and third plate members 112, 113 are arranged on both sides of the pinion shaft 24 in the circumferential direction, for example.

The pinion gear 23 is an annular member with a plurality of outer teeth (gear teeth) 23t formed on its outer circumference. A tooth width of the pinion gear 23 is determined to be approximately the same as a tooth width of the outer teeth 15t or a thickness of the driven member 15. Further, a plurality of needle bearings 230 are inserted in a central hole of the pinion gear 23 and disposed between an inner circumference surface of the pinion gear 23 and an outer circumference surface of the pinion shaft 24. Furthermore, a pair of large-diameter washers 231 are disposed on both sides in the axial direction of each pinion gear 23, and a pair of small-diameter washers 232 with a smaller diameter than the large-diameter washers 231 are disposed between the large-diameter washers 231 and the second or third plate members 112, 113.

The ring gear 25 of the planetary gear mechanism PG is an annular member with a plurality of inner teeth 25t formed on its inner circumference. In this embodiment, the inner teeth 25t are formed on an entire inner circumference of the ring gear 25 and a tooth widths of the inner teeth 25t are determined to be generally the same as the tooth widths of the outer teeth 15t and 23t of the driven member 15 and pinion gear 23. The inner teeth 25t may be formed at a plurality of locations spaced (equally spaced) in the circumferential direction on the inner circumference of the ring gear 25. The ring gear 25 works as a mass body (inertial mass body) of the rotary inertia mass damper 20. Thus, moment of inertia of the ring gear 25 can be increased to further improve vibration damping performance of the rotary inertia mass damper 20 by using the ring gear 25 located at the outermost circumference of the planetary gear mechanism PG as the mass body of the rotary inertia mass damper 20.

As shown in Fig. 2, the outer teeth 15t, each of the pinion gears 23 and ring gear 25 of the rotary inertia mass damper 20 (planetary gear mechanism PG) are disposed inside the outer cylindrical portion 112o of the second plate member 112 of the drive member 11 and between the second and third plate members 112, 113 in the axial direction. That is, the outer teeth 15t, each of the pinion gears 23 and ring gear 25 of the rotary inertia mass damper 20 (planetary gear mechanism PG), together with the plurality of springs SP and the plurality of elastic members EM, are enclosed by the drive member 11, that is the first and second plate members 111, 112.

In the power transmitting device 1, the transmission shaft TS is rotatably supported by the case C through a radial bearing 90 in the vicinity of the damper device 10. An annular flange (extended portion) 50 is extended from the transmission shaft TS. The flange 50 has a central hole into which the transmission shaft TS is splined. The flange 50 is fixed (integrated) to the transmission shaft TS so as to be located on the opposite side of the first plate member 111 with respect to the driven member 15. That is, movement of the flange 50 in the axial direction is restricted by the driven member 15 and a portion of the transmission shaft TS (the portion where splines are not formed).

Further, the flange 50 includes a short tubular (cylindrical) outer cylindrical portion (tubular portion) 51 axially extended from an outer circumference thereof. An outer diameter of the outer cylindrical portion 51 is determined to be smaller than an inner diameter of the inner cylindrical portion 112i of the second plate member 112. A sealing member 60 is disposed between the outer cylindrical portion 51 and the inner cylindrical portion 112i of the second plate member 112 so as to restrict an entry of foreign substances such as liquid and dust. The sealing member 60 is fixed to an outer circumference surface of the outer cylindrical portion 51 by press fitting or the like. A lip portion formed on an outer circumference of the sealing member 60 slidably contacts with the inner circumference surface of the inner cylindrical portion 112i of the second plate member 112 on the outside the plurality of tool holes 15h of the driven member 15 in the radial direction. The first plate member 111 of the drive member 11 has no openings other than the central hole and the bolt holes 111h, and the second plate member 112 has no openings other than the holes through which the rivets and the pinion shaft 24 are inserted. As a result, the outer teeth 15t (driven member 15) of the rotary inertia mass damper 20 (planetary gear mechanism PG), each of the pinion gears 23 and ring gear 25, the plurality of springs SP and the plurality of elastic members EM are arranged in a closed space defined by the crankshaft CS, the first plate member 111, the second plate member 112, the sealing member 60, the flange 50 and the transmission shaft TS. In addition, in the present embodiment, a radial bearing 70 is disposed between the outer cylindrical portion 51 and the inner cylindrical portion 112i of the second plate member 112 so as to be adjacent with respect to the sealing member 60 on the side of the driven member 15. Further, grease is applied to an engagement area between the driven member 15 (outer tooth 15t) and each pinion gear 23 and between each pinion gear 23 and ring gear 25, and a resin sheet or the like is disposed between two members relatively rotating each other.

In the power transmission device 1 configured as described above, when the clutch K0 is engaged in response to satisfaction of an engagement condition of the clutch K0, drive torque from the engine EG is transmitted to the drive member 11 or the first to third plate members 111-113 of the damper device 10. The torque (average torque) transmitted from the engine EG to the drive member 11 is transmitted to the driven member 15 through the plurality of springs SP until the input torque reaches the above torque T1. The torque transmitted to the driven member 15 is then transmitted to the drive shaft DS through the transmission shaft TS, the clutch K0, the rotor R of the motor generator MG, the clutch K2, the transmission TM and the differential gear DF and the like.

When the drive member 11 rotates (twists) with respect to the driven member 15, the plurality of springs SP flex and the ring gear 25 or the mass body rotates (oscillates) around the axial center in accordance with the relative rotation of the drive member 11 and the driven member 15. When the drive member 11 oscillates with respect to the driven member 15 in this manner, rotational speed of the second and third plate members 112, 113 or the carrier, which works as the input elements of the planetary gear mechanism PG, becomes higher than rotational speed of the driven member 15 or the sun gear. Thus, in this case, the ring gear 25 is speeded up by the action of the planetary gear mechanism PG and rotates at a higher rotational speed than the second and third plate members 112, 113 or the drive member 11. This enables inertia torque to be applied from the ring gear 25 or the mass body of the rotary inertia mass damper 20 to the driven member 15 or the output element of the damper device 10 via the pinion gear 23, thereby damping the vibration of the driven member 15. The rotary inertia mass damper 20 mainly transmits inertia torque between the drive member 11 and the driven member 15, and does not transmit the average torque.

In detail, when the plurality of springs SP and the rotary inertia mass damper 20 act in parallel, the torque (average torque) transmitted from the plurality of springs SP (torque transmission path TP) to the driven member 15 is dependent (proportional) on displacement (amount of deflection, or torsion angle) of each spring SP. In contrast, the torque (inertia torque) transmitted from the rotary inertia mass damper 20 to the driven member 15 is dependent (proportional) on difference in angular acceleration between the drive member 11 and the driven member 15, that is second derivative of the displacement of the spring SP between the drive member 11 and the driven member 15. Assuming that the input torque transmitted to the drive member 11 of the damper device 10 oscillates periodically, phase of oscillation transmitted from the drive member 11 to the driven member 15 via the plurality of springs SP and phase of oscillation transmitted from the drive member 11 to the driven member 15 via the rotary inertia mass damper 20 are shifted by 180°. As a result, in the damper device 10, one of the vibration transmitted to the driven member 15 from the plurality of springs SP and the vibration transmitted to the driven member 15 from the rotary inertia mass damper 20 cancels at least a part of the other, thereby satisfactorily damping of the vibration of the driven member 15.

Further, regardless of magnitude of the moment of inertia of the ring gear 25 or the mass body, the damper device 10 enables moment of inertia larger than total moment of inertia of the plurality of pinion gears 23 and ring gear 25 to be added to the second and third plate members 112, 113 or the drive members 11 while reducing moment of inertia of the driven member 15 or the sun gear. In detail, moment of inertia $J_i$ distributed to the drive member 11 and moment of inertia $J_o$ distributed to the driven member 15 by the planetary gear mechanism PG are expressed as in following equations (1) and (2), where "Jr" denotes the moment of inertia of the ring gear 25, "Jp" denotes total moment of inertia of the plurality of pinion gears 23, "λ" denotes tooth number ratio of the planetary gear mechanism PG (number of outer teeth 15t / number of inner teeth 25t). As seen from equations (1) and (2), the moment of inertia $J_i$ distributed to the drive member 11 is always a positive value that is greater than the total moment of inertia (Jr + Jp) of the ring gear 25 and the plurality of pinion gears 23. Further, the moment of inertia $J_o$ distributed to the driven member 15 is expressed as Jo = Jr + Jp - Ji, which is always a negative value.

[Equation 1]

$$J_i = J_r(1 + \lambda) + J_p \frac{1 + \lambda}{1 - \lambda} \quad \cdots \quad (1)$$

$$J_o = -J_r \lambda - J_p \frac{2\lambda}{1 - \lambda} \quad \cdots \quad (2)$$

Accordingly, the damper device 10 enables an increase in the moment of inertia (total value) of the input shaft IS of the transmission TM, which integrally rotates with the driven member 15, the rotor R of the motor generator MG, and the like, that is a decrease in the frequency of shaft resonance to be suppressed. Further, in the damper device 10, vibration (inertia torque) in the opposite phase to vibrations transmitted from the springs SP to the driven member 15 is transmitted from the rotary inertia mass damper 20 to the driven member 15, such that torque fluctuation due to the shaft resonance is reduced by the vibration transmitted from the rotary inertia mass damper 20 to the driven member 15. As a result, the damper device 10 satisfactorily suppresses the shaft resonance of the transmission TM from occurring and becoming apparent in the relatively low rotation range.

In the damper device 10, the drive member 11 or the first and second plate members 111, 112 are respectively formed to enclose the plurality of springs SP, the plurality of elastic members EM, the outer teeth 15t of the rotary inertia mass damper 20 (planetary gear mechanism PG), each of the pinion gears 23 and the ring gear 25. The sealing member 60 is disposed between the second plate member 112 of the drive member 11 and the flange 50 extended from the transmission shaft TS (another member) of the power transmission device 1, which is a member other than components of the damper device 10. Further, the sealing member 60 restricts the entry of the foreign substances into the drive member 11 on the outside each tool hole (clearance portion) 15h formed in the driven member 15 in the radial direction so as to allow the passage of tools for attaching and detaching the engine EG and the drive member 11.

This prevents the foreign substances from interfering with smooth operation of the springs SP, the elastic members EM, and the rotating inertia mass damper 20, thereby further improving the vibration damping performance of the entire damper device 10. In addition, by separating the transmission shaft TS (and elements on the side of drive shaft DS from the transmission shaft TS) from the damper device 10 (driven member 15), the tool can be inserted into each of the tool holes 15h of the driven member 15, such that the engine EG and the drive member 11 can be attached and detached from each other by means of the tool inserted into the tool holes 15h. As a result, assemblability and maintainability of the damper device 10 can be further improved while restricting the entry of the foreign substances into the drive member 11 or the first and second plate members 111, 112.

Further, in the above embodiment, the drive member 11 includes the first and second plate members 111, 112 which are joined to each other. The sealing member 60 is disposed between one of the first and second plate members 111, 112, that is the inner cylindrical portion (inner circumferential portion) 112i of the second plate member 112 and the outer cylindrical portion 51 of the flange 50 extended from the transmission shaft TS (another member). This enables the drive member 11 to be formed so as to enclose the springs SP and the components of the rotary inertia mass damper 20 and satisfactorily restricts the entry of the foreign substances into the drive member 11 by the sealing member 60.

In the above embodiment, the sealing member 60 is fixed to the flange 50 (outer cylindrical portion 51) of the transmission shaft TS and slides against the second plate member 112 (inner cylindrical portion 112i) of the drive member 11. As a result, after separating the transmission shaft TS and the like from the damper device 10 (driven member 15), the bolt B can be removed without interfering with the sealing member 60 and the tool each other, such that the engine EG and the drive member 11 can be attached and detached from each other. The sealing member 60 may be fixed to the second plate member 112 (inner cylindrical portion 112i) so as to slidably contact with the flange 50 (outer cylindrical portion 51) of the transmission shaft TS.

Further, in the above embodiment, the sealing member 60 is disposed radially inside the inner cylindrical portion 112i of the second plate member 112 and radially outside the outer cylindrical portion 51 of the flange 50. This enables the lip portion of the sealing member 60 to be pressed against inner circumference surface of the inner cylindrical portion 112i by means of centrifugal force acting on the sealing member 60 as the transmission shaft TS rotates. Accordingly, good sealing performance is ensured so as to satisfactorily restrict the entry of foreign substances into the drive member 11 when the centrifugal force acts on the sealing member 60. The outer cylindrical portion 51 of the flange 50 may be formed to enclose the inner cylindrical portion 112i of the second plate member 112. In such a case, the sealing member 60 may be disposed radially outside the inner cylindrical portion 112i of the second plate member 112 and radially inside the outer cylindrical portion 51 of the flange 50.

In the above embodiment, the radial bearing 70 is disposed between the inner cylindrical portion 112i of the second plate member 112 and the outer cylindrical portion 51 of the flange 50 extended from the transmission shaft TS so as to be adjacent to the sealing member 60. This enables axial shaking of the drive member 11 or the entire damper device 10 to be suppressed since the drive member 11 is supported substantially at both ends, thereby maintaining good sealing performance of the sealing member 60. The radial bearing 70 may be omitted from the damper device 10 (power transmission device 1).

Instead of the elastic member EM, the damper device 10 may be provided with a plurality of springs (second elastic elements) that configure a second torque transmission path parallel to the above described torque transmission path TP and that act in parallel with each other between the drive member 11 and the driven member 15 to transmit torque. The plurality of springs may act in parallel with the springs SP after the input torque to the drive member 11 reaches the above-mentioned torque T1 (first threshold) and the torsion angle of the drive member 11 relative to the driven member 15 exceeds the predetermined angle θref. This enables the damper device 10 to have two-stage damping characteristics.

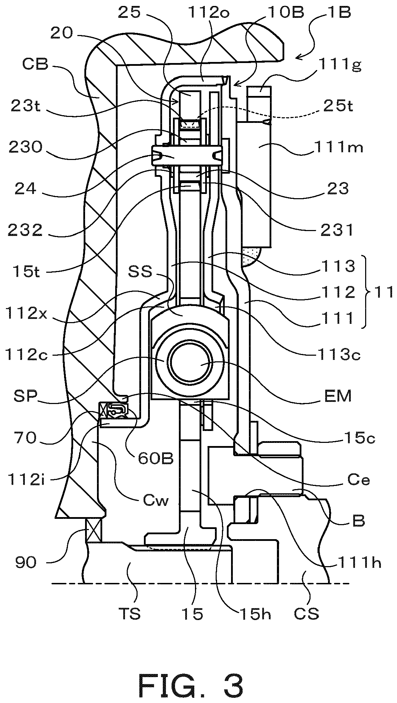

Fig. 3 is an enlarged sectional view of a power transmitting device 1B including another damper device 10B in the first embodiment of the present disclosure. Elements of the power transmission device 1B and the damper device 10B identical to those of the power transmission device 1 and the like described above are denoted by the same reference numerals and duplicated explanations are omitted.

In the power transmission device 1B shown in Fig. 3, the flange 50 is omitted from the transmission shaft TS. The case CB of the power transmitting device 1B includes a bulkhead portion Cw that separates space where the damper device 10 is located from space where the clutches K0, K2, motor generator MG, transmission TM, and the like are located, and a cylindrical extended portion Ce that is extended from the bulkhead portion Cw so as to enclose the inner cylindrical portion 112i of the second plate member 112 of the drive member 11. An inner circumference surface of the extended portion Ce of the case CB is formed in the shape of a concave cylindrical surface having a larger radius of curvature than the outer circumference surface of the inner cylindrical portion 112i of the second plate member 112. The inner circumference surface of the inner cylindrical portion 112i of the second plate member 112 is located radially outside the plurality of tool holes 15h of the driven member 15.

A sealing member 60B is disposed between the inner cylindrical portion 112i of the second plate member 112 and the extended portion Ce of the case CB so as to restrict the entry of foreign substances such as liquid and dust. The sealing member 60B is fixed to the inner circumference surface of the extended portion Ce by press fitting or the like. A lip portion formed on an inner circumference of the sealing member 60B slidably contacts with the outer circumference surface of the inner cylindrical portion 112i of the second plate member 112 on the outside the plurality of tool holes 15h of the driven member 15 in the radial direction. That is, the sealing member 60B is disposed radially outside the inner cylindrical portion 112i of the second plate member 112 and radially inside the extended portion Ce of the case CB. Further, the radial bearing 70 is disposed between the inner cylindrical portion 112i of the second plate member 112 and the extended portion Ce of the case CB such that it is adjacent to the sealing member 60B on the side that is separated from the driven member 15 (left side in the figure). A seal member not shown in the figure is provided between the case CB (bulkhead portion Cw) and the transmission shaft TS to restrict an inflow of oil (hydraulic fluid) from the space where the clutch K0 and the like are disposed to the space where the damper device 10 is disposed.

In the power transmitting device 1B including the damper device 10B, the outer teeth 15t (driven member 15) of the rotary inertia mass damper 20 (planetary gear mechanism PG), each of the pinion gears 23, the ring gear 25, the plurality of springs SP, and the plurality of elastic members EM are disposed in the closed space defined by the crankshaft CS, the first plate member 111, the second plate member 112, the sealing member 60B, the case CB, and the transmission shaft TS. Thus, the power transmitting device 1B and the damper device 10B have the same effect as the power transmission device 1 and the damper device 10. Further, in the power transmission device 1B including the damper device 10B, centrifugal force does not act on the sealing member 60B since the sealing member 60B is fixed to the extended portion Ce of the case CB, which is a stationary member. Thus, even if the sealing member 60B is disposed radially outside the inner cylindrical portion 112i so as to slidably contact with the outer circumference surface of the inner cylindrical portion 112i of the second plate member 112, the lip portion of the sealing member 60B can always be kept in good contact with the outer circumference surface of the inner cylindrical portion 112i. The sealing member 60B may be fixed to the outer circumference surface of the inner cylindrical portion 112i of the second plate member 112 so as to slidably contact with the inner circumference surface of the extended portion Ce. Further, the radial bearing 70 may be omitted from the damper device 10B (power transmission device 1B).

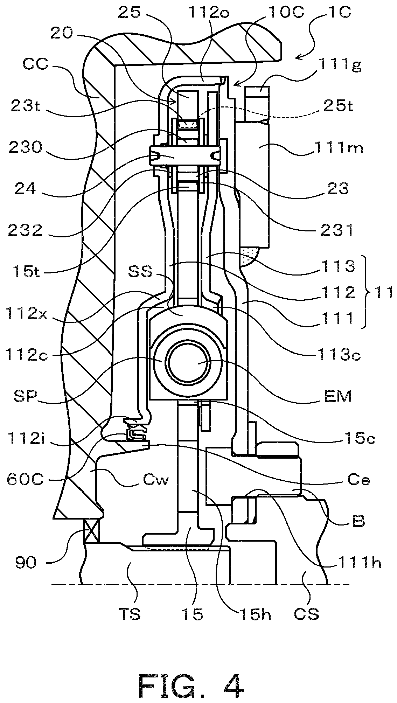

Fig. 4 is an enlarged sectional view of a power transmitting device 1C including yet another damper device 10C in the first embodiment of the present disclosure. Elements of the power transmission device 1C and the damper device 10C identical to those of the power transmission device 1 and the like described above are denoted by the same reference numerals and duplicated explanations are omitted.

In the power transmission device 1C shown in Fig. 4, a cylindrical extended portion Ce is extended from the bulkhead portion Cw of the case CC to be enclosed by the inner cylindrical portion 112i of the second plate member 112 of the drive member 11. The outer circumference surface of the extended portion Ce is formed in the shape of a cylindrical surface having a smaller radius of curvature than that of the inner circumference surface of the inner cylindrical portion 112i of the second plate member 112. The inner circumference surface of the inner cylindrical portion 112i is located radially outside the plurality of tool holes 15h of the driven member 15. Further, a sealing member 60C is disposed between the inner cylindrical portion 112i of the second plate member 112 and the extended portion Ce of the case CC so as to restrict the entry of foreign substances such as liquid and dust. The sealing member 60C is fixed to the outer circumference surface of the extended portion Ce by press fitting or the like. A lip portion formed on the outer circumference of the sealing member 60C slidably contacts with the inner circumference surface of the inner cylindrical portion 112i of the second plate member 112 on the outside the plurality of tool holes 15h of the driven member 15 in the radial direction. That is, the sealing member 60C is disposed radially inside the inner cylindrical portion 112i of the second plate member 112 and radially outside the extended portion Ce of the case CC.

The power transmission device 1C and the damper device 10C have the same effect as in the power transmission device 1 and damper device 10. The sealing member 60C may be fixed to the inner circumference surface of the inner cylindrical portion 112i of the second plate member 112 so as to slidably contact with the outer circumference surface of the extended portion Ce. The radial bearing 70 may be disposed between the inner cylindrical portion 112i of the second plate member 112 and the extended portion Ce of the case CC so as to be adjacent to the sealing member 60C.

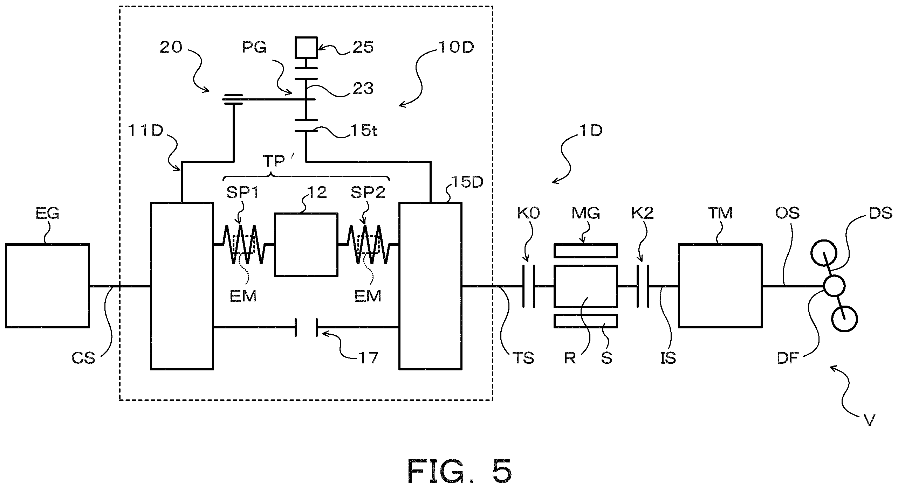

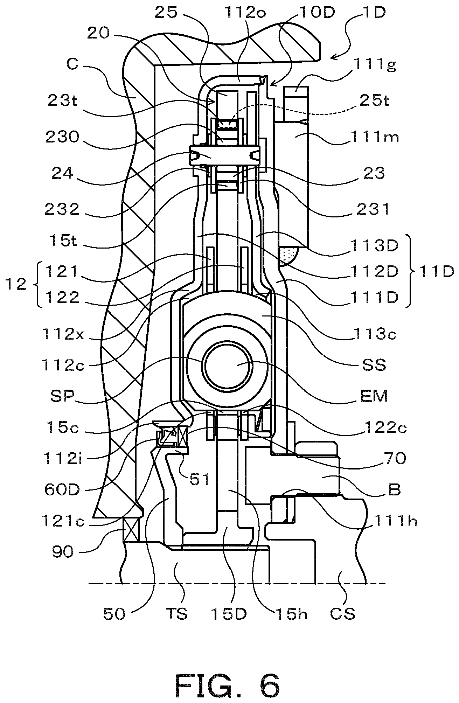

Fig. 5 is an enlarged sectional view of a power transmitting device 1D including a damper device 10D in the second embodiment of the present disclosure. Fig. 6 is an enlarged sectional view illustrating the power transmitting device 1D. Elements of the power transmission device 1D and the damper device 10D identical to those of the power transmission device 1 and the like described above are denoted by the same reference numerals and duplicated explanations are omitted.

The damper device 10D shown in Figs. 5 and 6 corresponds to the damper device 10 shown in Figs. 1 and 2 with the addition of an intermediate member 12. That is, the damper device 10D includes a drive member (input element) 11D, the intermediate member (intermediate element) 12, and a driven member (output element) 15D as rotating elements. Further, the damper device 10D includes, as torque transmitting elements (torque transmitting elastic bodies), a plurality (in this embodiment, for example, three) of first springs (input side elastic bodies) SP1 that transmit torque between the drive member 11D and the intermediate member 12, and a plurality (in this embodiment, for example, three) of second springs (output side elastic bodies) SP2 that act in series with the corresponding first spring SP1 to transmit torque between the intermediate member 12 and the driven member 15D.

The drive member 11D of the damper device 10D includes a first plate member (front cover) 111D that is fixed to the crankshaft CS of the engine EG via bolts B, a second plate member (rear cover) 112D that is integrated with the first plate member 111D, and a third plate member 113D that is fixed (connected) to the second plate member 112D via a plurality of rivets (not shown). The second plate member 112D of the drive member 11D includes a short tubular (cylindrical) inner cylindrical portion 112i extending in the axial direction, a plurality (in this embodiment, for example, three) of spring holding recesses 112x formed at intervals (equal intervals) in the circumferential direction along the inner cylindrical portion 112i, and a plurality (in this embodiment, for example, three) of torque transfer portions (elastic body contact portions) 112c. One torque transfer portion 112c is formed between the adjacent spring holding recesses 112x in the circumferential direction. The third plate member 113D includes a plurality (in this embodiment, for example, three) of spring accommodating windows spaced (equally spaced) in the circumferential direction to face the corresponding spring holding recess 112x of the second plate member 112D, and a plurality (in this embodiment, for example, three) of torque transfer portions (elastic body contact portions) 113c. One torque transfer portion 113c is formed between the adjacent spring accommodating windows in the circumferential direction.

The intermediate member 12 includes an annular first intermediate plate 121 and an annular second intermediate plate 122 that is fixed (connected) to the first intermediate plate 121 via a plurality of rivets (not shown) . The first intermediate plate 121 is disposed between the second plate member 112D of the drive member 11D and the driven member 15D in the axial direction. The second intermediate plate 122 is disposed between the third plate member 113D of the drive member 11D and the driven member 15D in the axial direction. The first intermediate plate 121 includes a plurality (in this embodiment, for example, three) of spring accommodating windows and a plurality (in this embodiment, for example, three) of torque transfer portions (elastic body contact portions) 121c, which are spaced (equally spaced) in the circumferential direction so as to respectively extend in an arc shape. Similarly, the second intermediate plate 122 includes a plurality (in this embodiment, for example, three) of spring accommodating windows and a plurality (in this embodiment, for example, three) of torque transfer portions (elastic body contact portions) 122c, which are spaced (equally spaced) in the circumferential direction so as to respectively extend in an arc shape. One torque transfer portion 121c is disposed between the adjacent spring accommodating windows along the circumferential direction and one torque transfer portion 122c is disposed between the adjacent spring accommodating windows along the circumferential direction.

The driven member 15D includes a plurality (in this embodiment, for example, three) of spring accommodating windows formed on the plate portion at circumferential intervals (equal intervals) so as to extend in an arc shape, and a plurality (in this embodiment, for example, three) of torque transfer portions (elastic body contact portions) 15c. One torque transfer portion 15c is formed between the adjacent spring accommodating windows in the circumferential direction. Further, the driven member 15 includes a plurality of tool holes (clearance portions) 15h formed to respectively face the corresponding bolt holes 111h of the first plate member 111, and a plurality of outer teeth 15t formed on the outer circumference.

Within each spring holding recess 112x of the second plate member 112D, each spring accommodating window of the first and second intermediate plates 121, 122, each spring accommodating window of the third plate member 113D, and each spring accommodating window of the driven member 15D, one first spring SP1 and one second spring SP2, to which the spring seat SS and the like are attached, are disposed so as to be paired with each other (to act in series). The first and second springs SP1, SP2 are straight coil springs or arc coil springs.

In the mounting state of the damper device 10D, each of the torque transfer portions 112c, 113c of the second and third plate members 112D, 113D configuring the drive member 11D contacts with the spring seat SS or the like attached to both the first and second springs SP1, SP2 which are disposed in different spring holding recesses 112x and the like and are not paired with each other (do not act in series). Further, in the mounting state of the damper device 10D, each of the torque transfer portions 121c, 122c of the intermediate member 12 contacts with an end portion such as the spring seat SS or the like attached to both the first and second springs SP1, SP2 which are disposed in the common spring holding recess 112x and the like and paired with each other. Furthermore, in the mounting state of the damper device 10D, each torque transfer portion 15c of the driven member 15D contacts with the spring seat SS and the like attached to both of the first and second springs SP1, SP2 which are disposed in different spring holding recesses 112x and the like and are not paired with each other (do not act in series).

Thus, the first and second springs SP1, SP2 are alternately arranged in the circumferential direction of the damper device 10D. The first and second springs SP1, SP2, which are paired with each other, are connected in series between the drive member 11D and the driven member 15D via the torque transfer portions 121C, 122C of the intermediate member 12. That is, the plurality of first springs SP1, intermediate member 12 and the plurality of second springs SP2 configure a torque transmission path TP' that transmits torque between the drive member 11D and the driven member 15D. As a result, the damper device 10D enables rigidity of the elastic body that transmits the torque between the drive member 11D and the driven member 15D, that is a composite spring constant of the first and second springs SP1, SP2 to be smaller.

Further, between the inner cylindrical portion 112i of the second plate member 112 of the drive member 11D and the outer cylindrical portion 51 of the flange 50 extended from the transmission shaft TS the sealing member 60D and the radial bearing 70 are disposed so as to restrict the entry of foreign substances such as liquid and dust into the drive member 11D. This enables the power transmitting device 1D and the damper device 10D to have the same effect as the power transmission device 1, the damper device 10 and the like. The radial bearing 70 may be omitted from the damper device 10D (power transmission device 1D). Further, in the power transmitting device 1D, the flange 50 may be omitted from the transmission shaft TS and the sealing member 60D may be disposed between the inner cylindrical portion 112i of the second plate member 112D and an extended portion extended from the case (not shown) of the power transmission device 1D.

Furthermore, in the damper device 10D including the intermediate member 12, two natural frequencies (resonant frequencies) can be set for state in which the first and second springs SP1, SP2 are allowed to deflect and the elastic member EM is not deflected. That is, In the torque transmission path TP', when the first and second springs SP1, SP2 are allowed to flex, the elastic member EM is not flexed, and a rotational speed Ne of the engine EG (rotational speed of the drive member 11) is extremely low, resonance (first resonance) occurs, for example, due to the drive member 11 and the driven member 15 vibrating in opposite phases to each other.

Natural frequency f12 of the intermediate member 12 in a single degree of freedom system is expressed as $f12 = 1/2\pi \sqrt{((k1 + k2)/J12)}$ (where "J12" denotes moment of inertia of the intermediate member 12, "k1" denotes a composite spring constant of the plurality of first springs SP1 acting in parallel between the drive member 11 and the intermediate member 12, and "k2" denotes a composite spring constant of the plurality of second springs SP2 acting in parallel between the intermediate member 12 and the driven member 15) . Since the moment of inertia J12 becomes relatively large by forming the intermediate member 12 in an annular shape, the natural frequency f12 of the intermediate member 12 becomes relatively small. As a result, in the torque transmission path TP', when the first and second springs SP1, SP2 are allowed to flex, the elastic member EM is not flexed, and the rotational speed Ne of the engine EG increases to some extent above a rotational speed corresponding to frequency of the first resonance, resonance of the intermediate member 12 (second resonance) occurs due to the intermediate member 12 vibrating in the opposite phase to both the drive member 11D and the driven member 15D.

An amplitude of the vibration transmitted from the torque transmission path TP'(second springs SP2) to the driven member 15D will turn from decreasing to increasing before the rotational speed Ne of the engine EG reaches the rotational speed corresponding to the relatively small natural frequency f12 of the intermediate member 12. On the other hand, an amplitude of the vibration transmitted from the rotary inertia mass damper 20 to the driven member 15D gradually increases as the rotational speed Ne of the engine EG increases. As a result, the damper device 10D can set a total of two anti-resonance points at which a vibration amplitude of the driven member 15D becomes theoretically zero due to an occurrence of two peaks, that is the first and second resonances in the torque transmitted through the torque transmission path TP' by a presence of the intermediate member 12. Thus, in the damper device 10D makes the amplitude of the vibration in the torque transmission path TP' as close as possible to the amplitude of the vibration in the rotary inertia mass damper 20, which is in the opposite phase to the amplitude of the vibration in the torque transmission path TP', at two points corresponding to the first and second resonances occurring in the torque transmission path TP', such that the vibration of the driven member 15D can be damped extremely well.

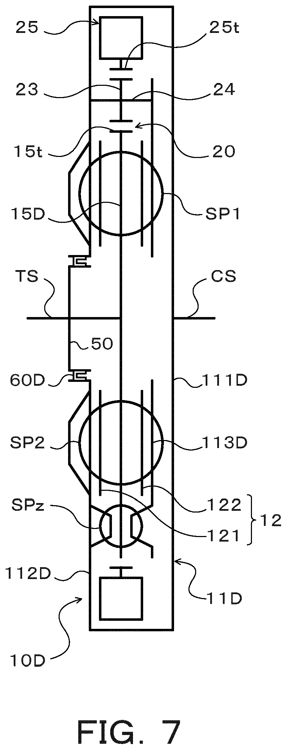

As shown in Fig. 7, the damper device 10D may be provided with, instead of the elastic member EM, a plurality of springs (second elastic bodies) SPz that configure a second torque transmission path parallel to the above-mentioned torque transmission path TP and that act in parallel with each other between the drive member 11D and the driven member 15D to transmit torque. The plurality of springs SPz act in parallel with the first and second springs SP1, SP2 after the input torque to the drive member 11D reaches the above torque (first threshold) T1, such that the damper device 10D has two-stage (two-stage) damping characteristics. The plurality of springs SPz may be arranged outside the first and second springs SP1, SP2 in the radial direction of the damper device 10D and circumferentially adjacent to the plurality of pinion gears 23 (see Fig. 7). The plurality of springs SPz may be arranged in a recess formed on an inner surface of an outer corner of the second plate member 112D. The plurality of springs SPz may be disposed inside the first and second springs SP1, SP2 in the radial direction of the damper device 10D.

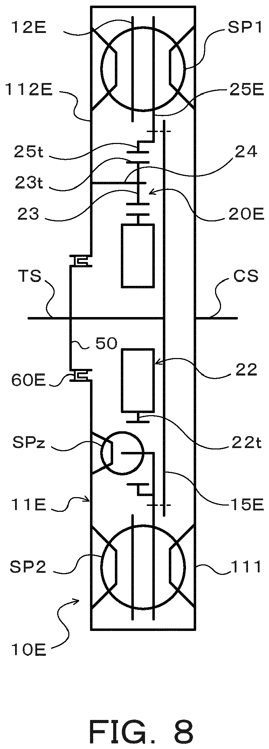

Fig. 8 is an enlarged sectional view of another damper device 10E in the second embodiment of the present disclosure. Elements of the damper device 10E identical to those of the damper device 10, 10D and the like described above are denoted by the same reference numerals and duplicated explanations are omitted.

In the damper device 10E shown in Fig. 8, a rotary inertia mass damper 20E includes a planetary gear mechanism that includes a sun gear 22 that includes a plurality of outer teeth 22t and works as the mass body (inertia mass body); a plurality of pinion gears 23 respectively including a plurality of outer teeth 23t that mesh with the outer teeth 22t of the sun gear 22; a second plate member 112E of a drive member 11E that rotatably supports the plurality of pinion gears 23 and works as a carrier; and a ring gear 25E including a plurality of inner teeth 25t that mesh with the plurality of pinion gears 23. In the rotary inertia mass damper 20E, the second plate member 112E as the carrier cantileverly supports one end (base end) of a plurality of pinion shafts 24 at circumferential intervals (equal intervals). Further, the ring gear 25E is integrated with the driven member 15E and configures an output element of the damper device 10E.

In the damper device 10E, moment of inertia larger than the sum of the moments of inertia of the plurality of pinion gears 23 and the sun gear 22 or the mass body is added to the second plate member 112E as the carrier, that is the drive member 11E, while the moment of inertia of the driven member 15E integrated with the ring gear 25E is reduced. In detail, moment of inertia Ji distributed to the drive member 11E and moment of inertia Jo distributed to the driven member 15E by the planetary gear mechanism are expressed as in following equations (3) and (4), where "Js" denotes moment of inertia of the sun gear 22, "Jp" denotes total moment of inertia of the plurality of pinion gears 23, "λ" denotes tooth number ratio of the planetary gear mechanism (number of outer teeth 22t of the sun gear / number of inner teeth 25t). In this embodiment, the moment of inertia Js of the sun gear 22 is sufficiently larger than the total value Jp of the moments of inertia of the plurality of pinion gears 23, and the moment of inertia Ji distributed to the drive member 11E is a positive value that is larger than the total value (Js + Jp) of the moments of inertia of the sun gear 22 and the plurality of pinion gears 23. The moment of inertia Jo distributed to the driven member 15E is expressed as Jo = Js + Jp - Ji, which is a negative value.

[Equation 2]

$$J_{\mathrm{i}} = J_s \frac{1+\lambda}{\lambda} + J_p \frac{-(1+\lambda)}{1-\lambda} \quad \cdots \quad (3)$$

$$J_{\mathrm{o}} = -J_s \frac{1}{\lambda} + J_p \frac{2}{1-\lambda} \quad \cdots \quad (4)$$

This suppresses an increase in moment of inertia (total value) of the input shaft IS of the transmission TM that integrally rotates with the driven member 15E and the rotor R of the motor generator MG and the like, that is a decrease in frequency of the shaft resonance. Further, in the damper device 10E, vibration (inertia torque) in the opposite phase to vibrations transmitted from the second springs SP2 to the driven member 15E is transmitted from the rotary inertia mass damper 20E to the driven member 15E, such that torque fluctuation due to the shaft resonance can be reduced by the vibration transmitted from the rotary inertia mass damper 20 to the driven member 15E. Thus, the damper device 10E also satisfactorily suppresses the shaft resonance of the transmission TM from occurring and becoming apparent in a relatively low rotation range.

In the damper device 10E, a radial bearing may be disposed between the second plate member 112E and the flange 50 extended from the transmission shaft TS so as to be adjacent to the sealing member 60E. The flange 50 may be omitted from the transmission shaft TS. The sealing member 60E may be disposed between the second plate member 112E and an extended portion extended from a case (not shown) of a power transmitting device including the damper device 10E. Further, the intermediate member 12E may be omitted from the damper device 10E.

As has been described above, the damper device according to the present disclosure is a damper device (10, 10B, 10C, 10D, 10E) that includes an input element (11, 11D, 11E) to which torque from an engine (EG) is transmitted, an output element (15, 15D, 15E), and an elastic body (SP, SP1, SP2, SPz, EM) that transmits torque between the input element and the output element. The input element (11, 11D, 11E) is formed to enclose the elastic body (SP, SP1, SP2, SPz, EM). The output element (15, 15D, 15E) includes a clearance portion (15h) that allows passage of a tool for attaching and detaching the engine (EG) and the input element (11, 11D, 11E). A sealing member (60, 60B, 60C, 10D, 10E) is disposed between the input element (11, 11D, 11E, 112, 112D, 112E, 112i) and another member (TS, 50, C, CB, CC, Ce) other than components of the damper device (10, 10B, 10C, 10D, 10E) so as to restrict an entry of foreign substances into the input element (11, 11D, 11E) on the outside the clearance portion (15h) in a radial direction.

In the damper device of the present disclosure, the sealing member is disposed between the input element formed to enclose the elastic body and another member other than the components of the damper device so as to restrict the entry of foreign substances into the input element. Further, the sealing member restricts the entry of foreign substances into the input element on the radially outside the clearance portion that allows passage of the tool for attaching and detaching the engine and the input element. This allows the tool to be inserted into the clearance portion by separating the another component from the damper device, such that the engine and the input element can be attached and detached from each other by means of the tool inserted into the clearance portion. As a result, assemblability and maintenability of the damper device can be further improved while restricting the entry of foreign substances into the input element formed to enclose an elastic body.

The sealing member (60, 60B, 60C, 60D, 60E) may be fixed to another member (TS, 50, 51, C, CC, CB, Ce) and slidably contacts with the input element (11, 11D, 11E, 112, 112D, 112E, 112i). This enables the engine and the input element to be attached and detached from each other without interfering with the sealing member and the tool each other.

The input element (11, 11D, 11E) may include two plate member (111, 111D, 112, 112D, 112E) joined to each other. The sealing member (60, 60B, 60C, 60D, 60E) is disposed between an inner circumferential portion (112i) of one of the two plate members (112, 112D, 112E) and an extended portion (50, 51, Ce) extended from the other member (TS, C, CC, CB). This enables the input member to be formed so as to enclose the elastic body and satisfactorily restricts the entry of the foreign substances into the input member by means of the sealing member.

The sealing member (60, 60B, 60C, 60D, 60E) may be disposed inside the inner circumferential portion (112i) in the radial direction and outside the extended portion (50, 51, Ce) in the radial direction. This ensures good sealing performance when centrifugal force acts on the sealing member.

The sealing member (60, 60B, 60C, 60D, 60E) may be disposed outside the inner circumferential portion (112i) in the radial direction and inside the extended portion (50, 51, Ce) in the radial direction.

A bearing (70) may be disposed adjacent to the sealing member (60, 60B, 60C, 60D, 60E) between the input element (11, 11D, 11E, 112, 112D, 112E, 112i) and said another member (TS, 50, C, CC, CB, Ce). This enables axial shaking of the input element or the entire damper device to be suppressed since the input element is supported substantially at both ends, thereby maintaining good sealing performance of the sealing member.

The damper device (10, 10B, 10C, 10D, 10E) may further includes a rotary inertia mass damper (20, 20E) with a mass body (25, 22) that oscillates in accordance with a relative rotation of the input element (11, 11D, 11E) and the output element (15, 15D, 15E). The input element (11, 11 11D, 11E) may be formed to enclose the rotary inertia mass damper (20, 20E). This further improves the vibration damping performance of the entire damper device while preventing the foreign substances from interfering with smooth operation of the rotating inertia mass damper.

The rotary inertia mass damper (20, 20E) may include a planetary gear mechanism (PG) with a sun gear (15, 15D, 15t, 22), a ring gear (25, 25E), a plurality of pinion gears (23), and a carrier (112, 112D, 112E, 113, 113D) that supports the pinion gears (23). The carrier (112, 112D, 112E, 113, 113D) may be a part of the input element (11, 11D, 11E). One (15, 15D, 15t, 15E, 25E) of the sun gear and the ring gear is a part of the output element. The other (22, 25) of the sun gear and the ring gear works as the mass body. Thus, moment of inertia larger than the sum of moments of inertia of the plurality of pinion gears and the other of the sun gear and the ring gear or the mass body is added to the carrier or the input element due to a characteristics of the rotary inertia mass damper including the planetary gear mechanism, while the moment of inertia of one of the sun gear and the ring gear or the output element is reduced.

Said another member may be a shaft (TS) coupled to the output element (15, 15D, 15E). The sealing member (60, 60B, 60C, 60D, 60E) may be disposed between the input element (11, 11D, 11E, 112, 112D, 112E, 112i) and a flange (50, 51) extended from the shaft (TS).

Said another member may be a case (C, CB, CC, Ce) that accommodates a transmission (TM) coupled to the output element (15, 15D, 15E).

The output element (15, 15D, 15E) may be coupled to a rotor (R) of an electric motor (MG). The rotor (R) of the electric motor (MG) is coupled to an input shaft (IS) of a transmission (TM).

Clutches (K0, K2) may be respectively disposed between the damper device (10, 10B, 10C, 10D, 10E) and the electric motor (MG), and between the electric motor (MG) and the transmission (TM).

The damper device (10D, 10E) may further includes an intermediate member (12, 12E). The elastic body includes an input side elastic body (SP1) that transmits torque between the input element (11D, 11E) and the intermediate element (12, 12E), and an output side elastic body (SP2) that transmits torque between the intermediate element (12, 12E) and the output element (15D, 15E).

This set two anti-resonance points where vibration transmitted from the output side elastic body to the output element and vibration transmitted from the rotary inertia mass damper to the output element theoretically cancel each other out, thereby further improving the vibration damping performance of the damper device.

The damper device (10, 10B, 10C, 10D, 10E) may be a dry damper.

The disclosure is not limited to the above embodiments in any sense but may be changed, altered or modified in various ways within the scope of extension of the disclosure. Additionally, the embodiments described above are only concrete examples of some aspect of the disclosure described in Summary and are not intended to limit the elements of the disclosure described in Summary.

**Industrial Applicability**

The techniques according to the disclosure is applicable to, for example, the field of manufacture of the damper device.

**Claims**

1. A damper device that includes an input element to which torque from an engine is transmitted, an output element, and an elastic body that transmits torque between the input element and the output element,

   wherein the input element is formed to enclose the elastic body,
   wherein the output element includes a clearance portion that allows passage of a tool for attaching and detaching the engine and the input element, and
   wherein a sealing member is disposed between the input element and another member other than components of the damper device so as to restrict an entry of foreign substances into the input element on the outside the clearance portion in a radial direction.

2. The damper device according to claim 1, wherein the sealing member is fixed to said another member and slidably contacts with the input element.

3. The damper device according to claim 1 or 2,

   wherein the input element includes two plate member joined to each other, and
   wherein the sealing member is disposed between an inner circumferential portion of one of the two plate members and an extended portion extended from the other member.

4. The damper device according to claim 3, wherein the sealing member is disposed inside the inner circumferential portion in the radial direction and outside the extended portion in the radial direction.

5. The damper device according to claim 3, wherein the sealing member is disposed outside the inner circumferential portion in the radial direction and inside the extended portion in the radial direction.

6. The damper device according to any one of claims 1 to 5,
   wherein a bearing is disposed adjacent to the sealing member between the input element and said another member.

7. The damper device according to any one of claims 1 to 6, further comprising:

   a rotary inertia mass damper with a mass body that oscillates in accordance with a relative rotation of the input element and the output element,
   wherein the input element is formed to enclose the rotary inertia mass damper.

8. The damper device according to claim 7, wherein the rotary inertia mass damper includes a planetary gear mechanism with a sun gear, a ring gear, a plurality of pinion gears, and a carrier that supports the pinion gears,

   wherein the carrier is a part of the input element,
   wherein one of the sun gear and the ring gear is a part of the output element, and
   wherein the other of the sun gear and the ring gear works as the mass body.

9. The damper device according to any one of claims 1 to 8,

   wherein the another member is a shaft coupled to the output element, and
   wherein the sealing member is disposed between the input element and a flange extended from the shaft.

10. The damper device according to any one of claims 1 to 8,
    wherein said another member is a case that accommodates a transmission coupled to the output element.

11. The damper device according to any one of claims 1 to 10,

    wherein the output element is coupled to a rotor of an electric motor, and
    wherein the rotor of the electric motor is coupled to an input shaft of a transmission.

12. The damper device according to claim 11, wherein clutches are respectively disposed between the damper device and the electric motor, and between the electric motor and the transmission.

13. The damper device according to any one of claims 1 to 12, further comprising:

    an intermediate member,
    wherein the elastic body includes an input side elastic body that transmits torque between the input element and the intermediate element, and an output side elastic body that transmits torque between the intermediate element and the output element.

14. The damper device according to any one of claims 1 to 13,
    wherein the damper device is a dry damper.

FIG. 1

FIG. 2

FIG. 3

FIG. 4

EP 3 951 210 A1

FIG. 5

FIG. 6

FIG. 7

FIG. 8

## INTERNATIONAL SEARCH REPORT

| | International application No. |
|---|---|
| | PCT/JP2020/017288 |

**A. CLASSIFICATION OF SUBJECT MATTER**
F16F 15/123(2006.01)i; F16F 15/3204(2016.01)i; F16F 15/3232(2016.01)i
FI: F16F15/123 A; F16F15/3204 201; F16F15/3232 201

According to International Patent Classification (IPC) or to both national classification and IPC

**B. FIELDS SEARCHED**

Minimum documentation searched (classification system followed by classification symbols)
F16F15/123; F16F15/3204; F16F15/3232

Documentation searched other than minimum documentation to the extent that such documents are included in the fields searched
Published examined utility model applications of Japan    1922–1996
Published unexamined utility model applications of Japan    1971–2020
Registered utility model specifications of Japan    1996–2020
Published registered utility model applications of Japan    1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-151337 A (NOK CORP.) 22.08.2016 (2016-08-22) paragraphs [0017]-[0049], fig. 1 | 1–14 |
| A | US 2017/0284547 A1 (NOK CORPORATION) 05.10.2017 (2017-10-05) fig. 1 | 1–14 |

☐   Further documents are listed in the continuation of Box C.    ☒   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 July 2020 (09.07.2020) | 21 July 2020 (21.07.2020) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

EP 3 951 210 A1

**INTERNATIONAL SEARCH REPORT**
Information on patent family members

International application No.

PCT/JP2020/017288

| Patent Documents referred in the Report | Publication Date | Patent Family | Publication Date |
| --- | --- | --- | --- |
| JP 2016-151337 A | 22 Aug. 2016 | (Family: none) | |
| US 2017/0284547 A1 | 05 Oct. 2017 | WO 2016/111129 A1 fig. 1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102013205919 A1